# FASCICULE DE BREVET EUROPEEN

(11) **EP 2 212 985 B1**
(45) Date de publication et mention de la délivrance du brevet: **11.05.2011**
(21) Numéro de dépôt: 08872233.5
(22) Date de dépôt: 19.11.2008
(51) Int. Cl.: H02K 3/52, H02K 5/22, H02K 29/08

(54) **ENSEMBLE DE CONNEXION ELECTRIQUE POUR MOTEUR SANS BALAI**
ELEKTRISCHE VERBINDERBAUGRUPPE FÜR EINEN BÜRSTENLOSEN MOTOR
ELECTRICAL CONNECTOR ASSEMBLY FOR A BRUSHLESS MOTOR

(30) Priorité: 19.11.2007 FR 0708111
(43) Date de publication de la demande: 04.08.2010
(73) Titulaire: Sonceboz Automative SA, 2605 Sonceboz (CH)
(72) Inventeur: ANDRIEUX, Gaël, CH-2605 Sonceboz (CH); SIGG, Daniel, CH-2605 Sonceboz (CH)
(74) Mandataire: Bentz, Jean-Paul
(86) Numéro de dépôt international: PCT/FR2008/001619
(87) Numéro de publication internationale: WO 2009/098382

(56) Documents cités:
- EP-A- 1 677 404
- EP-A- 1 727 261
- WO-A-03/001647
- JP-A- 2000 224 801
- US-A1- 2003 201 688
- US-A1- 2004 066 103
- US-A1- 2007 170 792

## Description

La présente invention concerne le domaine des moteurs électromagnétiques sans balai et plus spécialement des moyens de connexion électriques de ces moteurs. L'invention présente plus particulièrement, à destination des moteurs de diamètre de relatives petites tailles (typiquement <F50 mm), un ensemble de connexion comprenant un connecteur extérieur unique à N fiches de connexion électrique destiné à connecter 3 phases électriques, à X bobines par phase, commandant le moteur et Y signaux codeurs gérant, par exemple, la position du rotor dudit moteur, N étant égal à 3 + Y, et ce en un nombre minimal de pièces.

Les moteurs électromagnétiques sans balai présentent un ensemble de bobines d'excitation électrique généralement configurées pour réaliser une alimentation polyphasée. Dans le cas de moteurs triphasés, il y a donc 3X bobines à connecter, si X est le nombre de bobines par phase, reliées en série ou en parallèle, en configuration étoile ou triangle.

On connaît dans l'art antérieur des solutions pour d'une part connecter les bobines entre elles et d'autre part pour sortir les 3 connexions nécessaires à l'alimentation des 3 phases. Par exemple, le document EP01677404 (Hitachi) présente des moyens de connexion des bobines sous la forme d'anneaux reliant les bobines et des moyens de connexion sous la forme d'un connecteur déporté latéralement et assurant la connexion avec les anneaux. Pour de petites dimensions, le fait d'utiliser au moins deux ensembles de pièces devant être reliés soudés ou par force, les anneaux et le connecteur, il en résulte une multiplicité de pièces et de connexion élevant le coût d'une telle solution. De plus, ce brevet implique l'utilisation d'un codeur afin de connaître la position du moteur et de pouvoir le piloter. Ce codeur nécessite aussi des moyens de connexion annexes. Au final, le nombre de connexions et connecteurs sont importants et ne permettent pas de réaliser un ensemble compact et ne permettent ainsi pas de minimiser les risques de défaillance.

De même, on connaît le document US7045920 (Hitachi) présentant dans son art antérieur des connecteurs sous la forme de pistes en cuivre qui sont découpées dans des feuilles de cuivre puis recourbées sur leurs parties destinées à assurer la connexion électrique avec les bobines. On fixe les pistes au-dessus des bobines puis éventuellement dans un support recevant ces pistes comme par exemple dans le brevet EP01727261 (Papst) ou le brevet US20070170792 (Siemens). Dans ces brevets, le nombre de pièces nécessaires est très important et il reste toujours le problème du codeur nécessaire pour ces moteurs et qui nécessite des connexions et un connecteur supplémentaires. De plus, la découpe de ces pistes dans des feuilles de cuivre demande des quantités de matière importante afin de pouvoir réaliser le nombre de pistes nécessaires. Au final, le coût de réalisation est élevé.

La présente invention a pour but de répondre aux problèmes soulevés ci-dessus en proposant une solution de connectique avantageuse permettant de ramener les 3 phases électriques d'un moteur à X bobines par phase, connectées en série ou parallèle et en triangle ou étoile, à un connecteur ayant 3 cosses, avec un nombre limité de pièces.

À cet effet, les 3 phases électriques sont alimentées par au moins 3 fiches électriques qui se présentent, sur leur partie principale, sous la forme d'une piste à section rectangulaire de forme circulaire avec pour centre l'axe de révolution du moteur. Cette piste est prolongée axialement par au moins deux pince-fils qui viennent en contact avec les extrémités des bobines électriques. Cette piste de forme circulaire est aussi prolongée radialement par une cosse destinée à sortir, latéralement par rapport au moteur, à travers un connecteur. Chaque fiche électrique permet de connecter une phase électrique avec le nombre approprié de pince-fils. Dans le cas d'un bobinage en triangle avec deux bobines en parallèle par phase, chaque fiche électrique comprend quatre pince-fils qui connectent chacun une borne de quatre bobines différentes.

Lors de la phase de connexion des pince-fils sur les bornes des bobines, ces bornes sont maintenues en position grâce à un guide-fils sous la forme d'une pièce, par exemple en matière plastique, circulaire et présentant des encoches permettant aux pince-fils des fiches électriques de passer au travers de ce guide-fils afin de réaliser la connexion électrique.

Les trois fiches électriques de connexion des bobines du moteur sont regroupées sur un support de connexion, maintenant ces trois fiches l'une par rapport à l'autre. Les trois cosses aux extrémités des fiches sont avantageusement décalées axialement l'une par rapport à l'autre afin d'être alignées axialement en sortie du connecteur. Il n'y a ainsi pas de chevauchement des pistes l'une par rapport à l'autre.

Au final et dans le cas d'une configuration triangle parallèle, il n'y a qu'une seule pièce continue par phase permettant l'alimentation électrique depuis un connecteur où arrive le courant d'alimentation jusqu'aux bobines électriques recevant ce courant.

Ainsi, la présente invention revendique un ensemble de connexion électrique d'un moteur électromagnétique sans balai comprenant un ensemble statorique bobiné à 3 phases électriques et X bobines par phase, reliées en parallèle ou en série, caractérisé en ce qu'il comprend un guide-fils circulaire à encoches destiné à maintenir les extrémités des fils des bobines et un support de connexion contenant au moins 3 pistes de cuivres circulaires, 3 de ces dites pistes étant terminées chacune par une cosse, et qui sont prolongées axialement par des pince-fils venant assurer, au travers des encoches du guide-fils, le contact électrique des 3 phases du moteur et en ce que les cosses sont sorties hors du moteur au travers d'un connecteur.

L'invention a aussi pour but de proposer une solution de connexion d'un ensemble de Y signaux (par exemple ceux de sondes de Hall) appartenant à un codeur servant à détecter la position du rotor dudit moteur depuis un circuit imprimé vers ce même connecteur.

À cet effet, le codeur se présente avantageusement sous la forme d'au moins une piste circulaire aimantée liée au rotor et présentant des alternances de pôles magnétiques Nord-Sud associée à au moins deux sondes de Hall, positionnées sur un circuit imprimé au voisinage axial direct de la piste aimantée et détectant l'évolution de l'induction magnétique générée par la piste aimantée. La gestion électrique (alimentation et lecture des signaux) des sondes de Hall est réalisée par un ensemble de Y fiches qui partent du circuit imprimé et sont sorties, hors du moteur et latéralement, vers un connecteur.

Un objet de l'invention est aussi de proposer un ensemble de connexion caractérisé en ce que les 3 cosses de connexion électrique du moteur et les Y fiches du codeur font partie du même connecteur.

Afin de réaliser une réalisation compacte, ce connecteur se présente sous la forme d'une matrice de forme parallélépipédique. Dans le centre du connecteur, sont disposées de façon avantageuse trois ouvertures destinées à recevoir les trois cosses des fiches d'alimentation électrique du moteur. Réparties de chaque côté, on retrouve Y ouvertures destinées à recevoir les Y fiches servant à la gestion des sondes du codeur. Le connecteur présente ainsi un ensemble de 3+Y ouvertures concentrées en un espace minimum et sur la même surface.

Un autre des objets de l'invention est aussi de proposer une méthode de connexion de faible encombrement et de faible résistivité électrique globale afin de pouvoir être utilisé principalement pour des moteurs de petites tailles sans générer des pertes de potentiel électrique importantes.

Un autre des objets de l'invention est de proposer un connecteur composé de pistes conductrices enroulées permettant de générer des gains de coût de production.

Un autre des objets de l'invention est de proposer un connecteur, regroupant les connexions électriques du moteur et du codeur, qui présente une sortie latérale par rapport à l'axe du moteur afin de garantir une réalisation compacte.

Un autre des objets de l'invention est de proposer un ensemble moteur + connecteur surmoulé compact destiné à actionner une charge extérieure.

Un autre des objets de l'invention est enfin de proposer un connecteur reliant un codeur constitué de deux pistes aimantées circulaires concentriques présentant un nombre différent d'alternances Nord-Sud et associées chacune à des sondes de mesure de champ magnétique afin de permettre des modes de pilotage variés (démarrage, fonctionnement continu...).

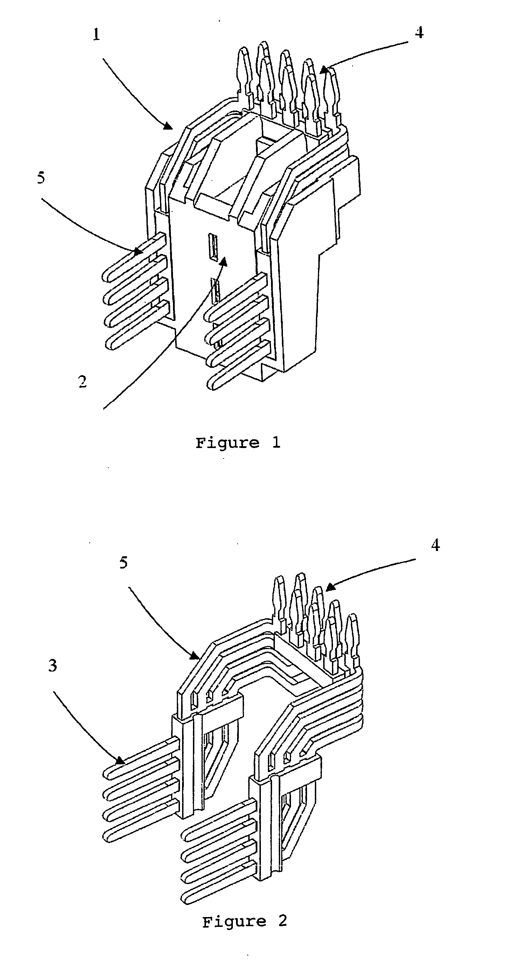

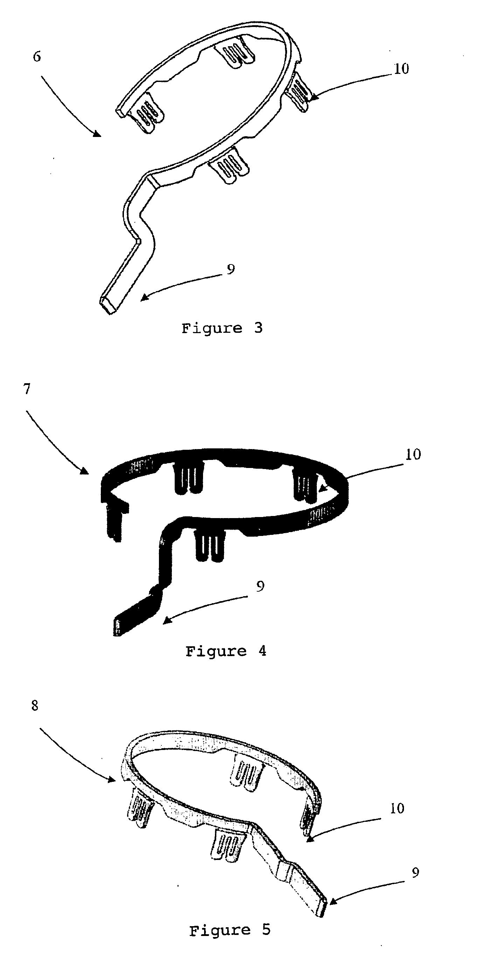

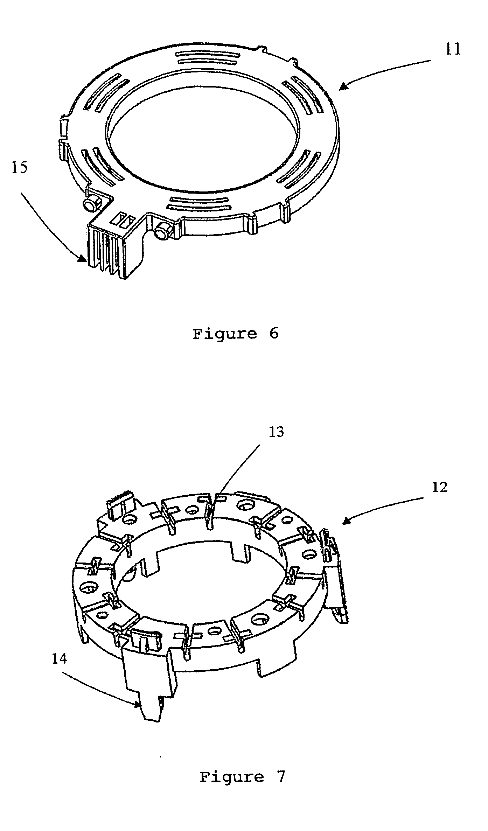

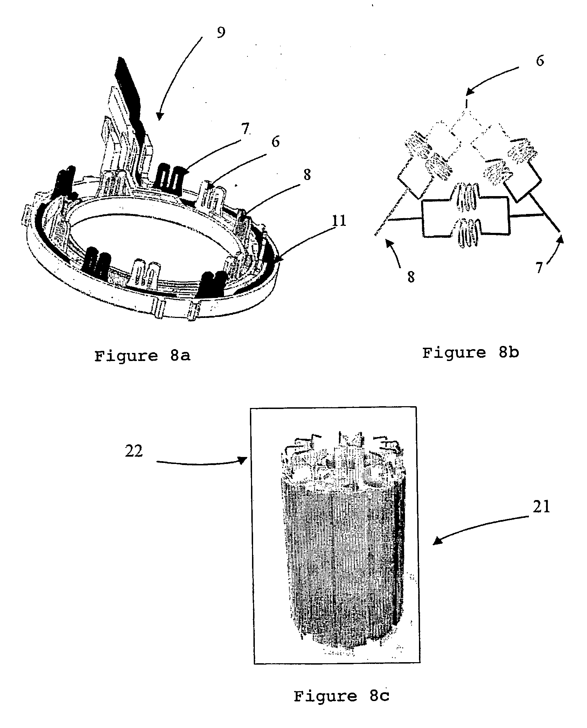

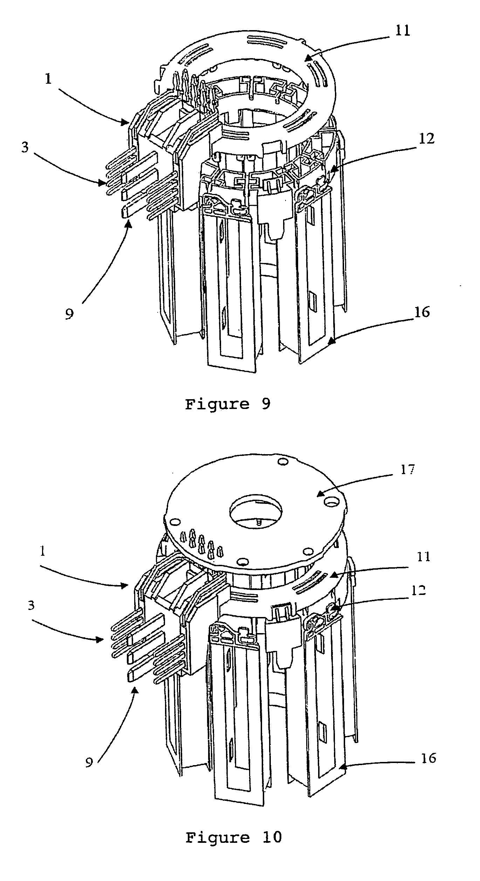

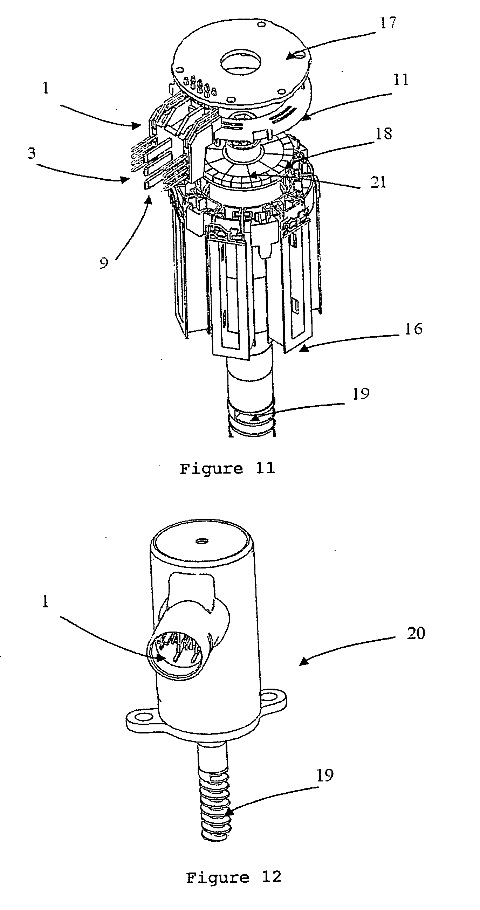

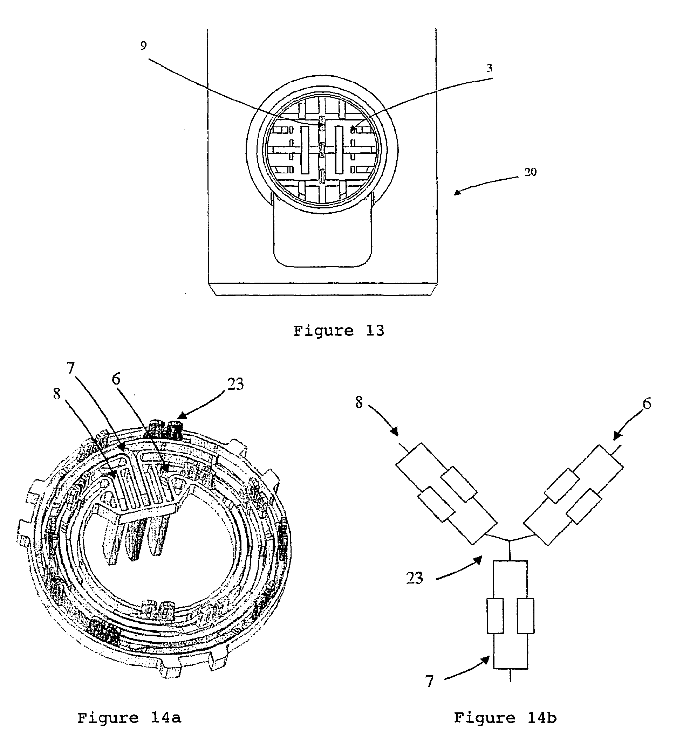

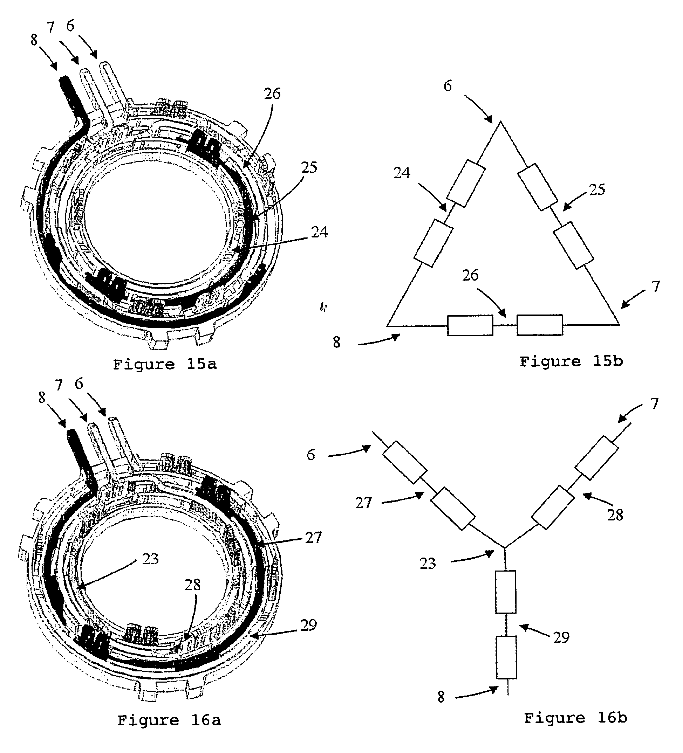

L'invention sera mieux comprise à la lecture de la description qui suit, faisant référence aux dessins annexés où:
o la figure 1 présente un connecteur décrit par la présente invention,
o la figure 2 présente un ensemble de fiches électriques en vue isolée, partie du connecteur de la figure 1,
o la figure 3 présente un exemple d'une première piste en cuivre destiné à être connectée sur un guide-fils,
o la figure 4 présente un exemple d'une deuxième piste en cuivre destiné à être connectée sur un guide-fils,
o la figure 5 présente un exemple d'une troisième piste en cuivre destiné à être connectée sur un guide-fils,
o la figure 6 présente un support de connexion destiné à recevoir les pistes en cuivre,
o la figure 7 présente le guide-fils destiné à venir se connecter sur un ensemble statorique bobiné,
o la figure 8a présente le support de connexion monté avec les pistes en cuivre,
o la figure 8b présente schématiquement la connexion de type triangle parallèle réalisée avec les pistes des figures 3, 4 et 5,
o la figure 8c présente une vue isolée de l'ensemble bobines + stator,
o la figure 9 présente une vue éclatée du connecteur, de l'ensemble bobiné, de l'ensemble support de connexion avec pistes et du guide-fils,
o la figure 10 présente une vue éclatée du connecteur, de l'ensemble bobiné, de l'ensemble support de connexion avec pistes, du guide-fils et d'un circuit imprimé,
o la figure 11 présente une vue éclatée du connecteur, de l'ensemble bobiné, de l'ensemble support de connexion avec pistes, du guide-fils, d'un circuit imprimé et d'un ensemble codeur destiné à assurer la gestion de commutation des phases du moteur,
o la figure 12 présente un moteur surmoulé avec une sortie latérale de connexion,
o la figure 13 présente une vue isolée du connecteur dans sa forme surmoulée,
o les figures 14a et 14b présentent un second mode de réalisation de l'ensemble de connexion destiné à une connexion étoile de six bobines, reliée deux à deux en parallèle,
o les figures 15a et 15b présentent un troisième mode de réalisation de l'ensemble de connexion destiné à une connexion triangle de six bobines, reliée deux à deux en série,
o les figures 16a et 16b présentent un quatrième mode de réalisation de l'ensemble de connexion destiné à une connexion étoile de six bobines, reliée deux à deux en parallèle.

La figure 1 présente un connecteur (1) composant de l'ensemble de connectique revendiqué par le présent brevet. Ce connecteur (1) permet la sortie de 8 fiches électriques (5) reliant par exemple les sondes d'un codeur ainsi que des passages (2) pour des cosses de connexion des 3 phases électriques d'un moteur.

Sur le haut du connecteur (1), les 8 fiches de connexion (5) sortent en (4) pour être connectées sur un circuit imprimé.

La figure 2 présente une vue isolée des fiches (5) de connexion avec des sorties basses (3) destinées à être connectées à un organe extérieur gérant l'alimentation et la lecture des signaux qui passent par ces fiches (5), en l'occurrence les signaux d'un codeur de la position, sous forme par exemple de sondes de Hall.

Les figures 3, 4 et 5 présentent 3 pistes électriques (6) (7) et (8) de forme enroulée et se terminant chacun par une cosse (9) destinée à sortir par le passage (2) du connecteur (1). Ces pistes comprennent aussi des pince-fils (10) destinés à pincer les fils (22) de sorties des bobines du moteur. Dans le présent cas, ces 3 pistes (6) (7) et (8) permettent de réaliser la connexion électrique de 6 bobines en une configuration triangle à deux bobines en parallèle par phase. Chaque piste (6) est ainsi reliée à 4 bobines pour former deux à deux une phase d'alimentation électrique comme présentée schématiquement en figure 8b. La forme enroulée permet de limiter les coûts de découpe de la pièce.

Au final, l'ensemble de ces 3 pistes (6) permet d'alimenter les 3 phases du moteur en un nombre limité de pièces.

Les 3 pistes électriques (6) (7) et (8) se connectent via les pince-fils (10) sur les bobines et sont ensuite fixées solidairement entre eux grâce à un support de connexion (11) comme présenté en figure 8a, qui reprend chacune de ces pistes (6) (7) et (8) afin d'aligner les cosses (9) verticalement pour les sortir vers le connecteur (1). À cet effet, chacune des pistes (6) (7) et (8) présente une cosse qui, selon la piste considérée, est plus ou moins décalée axialement l'une par rapport à l'autre.

La connexion des fils (22) de chaque bobine électrique du moteur à chacune des pistes (6) (7) et (8) est réalisée avec l'aide d'un guide-fils (12), présenté en figure 7, qui vient se positionner axialement au-dessus des têtes de bobines, et qui est fixé sur le stator (21) du moteur. Les bobines sont positionnées de façon à présenter leurs extrémités de fils (22) vers le haut, comme montré en figure 8c, et le guide-fils (12) vient sur ces extrémités pour assurer leur positionnement. Une fois le guide-fils (12) positionné au-dessus des bobines, la connexion des pistes conductrice (6) (7) et (8) se fait ainsi grâce aux encoches (13) laissant passer les pince-fils (10) et dans lesquelles sont positionnés les extrémités de fil. Le pincement des fils (22) et la connexion électrique sont ainsi assurés.

La figure 9 présente l'assemblage des 6 bobines (16) connectées avec le guide-fils (12). Le support de connexion (11), comprenant les trois pistes (6) (7) et (8) montés dessus présente les trois cosses (9) sortant du connecteur (1). Le connecteur (1) présente ainsi les connexions électriques du moteur et du codeur sur un même et seul connecteur (1) placé latéralement par rapport à l'axe du moteur. L'ensemble connecteur (1) + pistes (6) (7) et (8) + support de connexion (11) sont sur cette figure 9 en approche de l'ensemble bobines (16) + guide-fils (12).

Sur la figure 10, l'ensemble bobines (16) + guide-fils (12) est connecté avec l'ensemble connecteur (1) + pistes (6) (7) et (8) + support de connexion (11). Le circuit imprimé (17) sur lequel sont placées les sondes de Hall nécessaire à l'ensemble codeur gérant la position du rotor du moteur, est relié aux fiches de connexion (5).

La figure 11 présente ces mêmes ensembles avec des pistes magnétiques (18 et 21) concentriques et solidaires du rotor (19) du moteur (20) qui permettent, avec l'aide des sondes de Hall positionnées sur le circuit imprimé (17), de lire la position du rotor du moteur. Ces pistes magnétiques (18 et 21) sont avantageusement concentriques et de pas polaires différents, afin de pouvoir assurer une complète sécurité dans la lecture de la position et de pouvoir envisager des modes de pilotage (démarrage, fonctionnement continu ...) différents. Sur cette figure 11, la première piste magnétique (18) extérieure est formée de 15 paires de pôles magnétiques et elle est associée à 2 sondes de Hall. La deuxième piste magnétique (21) est formée de 5 paires de pôles magnétiques et elle est associée à 3 sondes de Hall. Ainsi, il y a besoin de sortir du circuit imprimé (17) au moins 7 fiches de connexion (5) vers le connecteur (1). Ce connecteur (1) présente ainsi 8 fiches (5) dont une n'est reliée à aucune sonde, associées aux 3 cosses (9) d'alimentation du moteur, formant ainsi un connecteur (1) unique.

Avec cet ensemble codeur, le moteur peut indifféremment être piloté avec l'une ou l'autre des pistes magnétiques (18 et 21), associées aux sondes de Hall.

Cette figure 11 présente aussi sur la sortie basse du moteur (20), un rotor (19) prolongé par une vis, exemple non limitatif de ce qu'il est possible d'utiliser comme sortie afin de commander une charge extérieure.

La figure 12 présente un mode de réalisation dans lequel le moteur est de forme cylindrique et le connecteur est sorti latéralement. Cet exemple présente le moteur surmoulé (20) dans sa forme finale, formé de l'ensemble décrit précédemment qui est surmoulé, mais laissant libre la sortie du connecteur latéral sur le moteur surmoulé (20) pour permettre la connexion et l'alimentation et gestion des signaux électriques du moteur surmoulé (20) ainsi que du codeur de la position du rotor du moteur.

La figure 13 présente une vue isolée du connecteur (1) surmoulé avec le moteur (20). Sur cette figure 13, on voit bien, regroupés sur le seul connecteur (1), les éléments de connexion électrique du moteur sous la forme de 3 cosses (9) et les éléments de gestion du codeur sous la forme ici de 8 fiches (3).

Nous avons présenté ici un mode de réalisation préférentiel décrivant la connectique en triangle d'un ensemble triphasé de six bobines connectées en parallèle deux à deux par phase, qui est le mode de réalisation le plus simple en termes de nombre de pièces. Il est bien sûr possible d'imaginer un nombre varié d'ensemble de connexion triangle ou étoile d'un ensemble de M bobines suivant les mêmes enseignements sans dévier du propos de l'invention, le nombre de pistes en cuivre variant suivant le mode de connexion et le nombre de bobines total.

Par exemple et comme montré en figures 14a et 14b, dans le cas d'une connexion étoile parallèle de six bobines, il y aurait besoin de 1 piste supplémentaire (23) s'ajoutant aux 3 déjà décrites plus haut (6, 7 et 8), sans cosse de sortie, afin de relier entre elles les six bobines.

Par exemple encore et comme montré en figures 15a et 15b, dans le cas d'une connexion triangle série de six bobines, il y aurait au moins 3 pistes supplémentaires (24, 25 et 26), s'ajoutant aux 3 déjà décrites plus haut (6, 7 et 8), sans cosse de sortie afin de relier entre elles chaque bobine appartenant à une phase.

Par exemple encore et comme montré en figures 16a et 16b, dans le cas d'une connexion étoile série de six bobines, il y aurait besoin de 4 pistes supplémentaires (23, 27, 28 et 29) s'ajoutant aux 3 déjà décrites plus haut (6, 7 et 8), sans cosse de sortie, afin de relier entre elles trois bobines des trois phases et entre elles chaque bobine d'une même phase.

## Revendications

1. Ensemble de connexion électrique pour un moteur électromagnétique sans balai comprenant un ensemble statorique bobiné à 3 phases électriques et X bobines par phase, reliées en parallèle ou en série, **caractérisé en ce qu'**il comprend un guide-fils circulaire à encoches (12) destiné à maintenir les extrémités des fils des bobines et un support de connexion contenant au moins 3 pistes conductrices circulaires (6), 3 de ces dites pistes étant terminées chacune par une cosse (9), et qui sont prolongées axialement par des pince-fils (10) venant assurer, au travers des encoches du guide-fils, le contact électrique des 3 phases du moteur et **en ce que** les cosses sont sorties hors du moteur au travers d'un connecteur(1).

2. Ensemble de connexion électrique pour un moteur électromagnétique sans balai selon la revendication 1, **caractérisé en ce que** le connecteur reçoit Y fiches (5) reliées à un circuit imprimé et reliant les éléments de gestion d'un codeur.

3. Ensemble de connexion électrique pour un moteur électromagnétique sans balai selon l'une des revendications précédentes, **caractérisé en ce que** les 3 cosses de connexion électrique du moteur et les Y fiches du codeur font partie du même connecteur en sortie du moteur.

4. Ensemble de connexion électrique pour un moteur électromagnétique sans balai selon la revendication précédente, **caractérisé en ce que** le connecteur est sous la forme d'une matrice présentant 3 + Y ouvertures laissant passer les 3 cosses de connexion électrique du moteur et les Y fiches de gestion électrique du codeur.

5. Ensemble de connexion électrique pour un moteur électromagnétique sans balai selon l'une des revendications précédentes, **caractérisé en ce que** le moteur et l'ensemble de connexion sont surmoulés en un seul ensemble.

6. Moteur électromagnétique sans balai comprenant un ensemble statorique (21) bobiné à 3 phases électriques et X bobines par phase ainsi qu'un rotor (19) et un ensemble de connexion électrique selon la revendication 1.

7. Moteur électromagnétique selon la revendication précédente, **caractérisé en ce que** le moteur est de forme cylindrique et le connecteur est sorti latéralement.

8. Moteur électromagnétique selon la revendication précédente, **caractérisé en ce que** le connecteur reçoit Y fiches reliées à un circuit imprimé et reliant les éléments de gestion d'un codeur constitué par des sondes de Hall gérant la commutation électrique des phases du moteur, ledit codeur présentant deux pistes aimantées circulaires concentriques formées chacun d'une pluralité d'alternances Nord-Sud d'aimants, les deux pistes ayant un nombre d'alternances différent.

9. Moteur électromagnétique selon, la revendication précédente, **caractérisé en ce que** les éléments de gestion sont répartis en A sondes de Hall en regard de la première piste aimantée circulaire et B sondes de Hall en regard de la deuxième piste aimantée circulaire.

## Claims

1. Electrical connection assembly for a brushless electromagnetic motor comprising a coiled stator assembly with 3 electric phases and X coils per phase, connected in parallel or in series, **characterized in that** it comprises a notched circular wire guide (12) designed to retain the ends of the wires of the coils and a connection support containing at least 3 circular conductive tracks (6), 3 of these said tracks each being terminated by a terminal (9) and which are axially extended by wire grips (10) ensuring, through the notches of the wire guide, the electric contact of the 3 phases of the motor, and **in that** the terminals are taken out of the motor through a connector (1).

2. Electrical connection assembly for a brushless electromagnetic motor according to Claim 1, **characterized in that** the connector receives Y male plugs (5) connected to a printed circuit and connecting the management elements of a coder.

3. Electrical connection assembly for a brushless electromagnetic motor according to one of the preceding claims, **characterized in that** the 3 electrical connection terminals of the motor and the Y male plugs of the coder form part of the same connector exiting the motor.

4. Electrical connection assembly for a brushless electromagnetic motor according to the preceding claim, **characterized in that** the connector is in the form of a matrix having 3 + Y openings allowing the 3 electrical connection terminals of the motor and the Y electrical management male plugs of the coder to pass through.

5. Electrical connection assembly for a brushless electromagnetic motor according to one of the preceding claims, **characterized in that** the motor and the connection assembly are overmoulded in a single assembly.

6. Brushless electromagnetic motor comprising a coiled stator assembly (21) with 3 electric phases and X coils per phase and a rotor (19) and an electrical connection assembly according to Claim 1.

7. Electromagnetic motor according to the preceding claim, **characterized in that** the motor is of cylindrical shape and the connector is taken out laterally.

8. Electromagnetic motor according to the preceding claim, **characterized in that** the connector receives Y male plugs connected to a printed circuit and connecting the management elements of a coder consisting of Hall probes managing the electrical switching of the phases of the motor, the said coder having two concentric circular magnetized tracks each formed of a plurality of north-south alternations of magnets, the two tracks having a different number of alternations.

9. Electromagnetic motor according to the preceding claim, **characterized in that** the management elements are distributed in A Hall probes facing the first circular magnetized track and B Hall probes facing the second circular magnetized track.

## Patentansprüche

1. Elektrische Anschlusseinheit für einen bürstenlosen elektromagnetischen Motor, umfassend eine gewickelte Statoreinheit mit drei elektrischen Phasen und X Wicklungen pro Phase, parallel oder in Reihe verbunden, **dadurch gekennzeichnet, dass** dieser umfasst einen kreisförmigen Drahtführer mit Kerben (12), der dazu bestimmt ist, die Enden des Wicklungsdrahts zu halten, und einen Anschlussträger, der wenigstens drei kreisförmige Leiterbahnen (6) enthält, wobei drei dieser Bahnen jeweils mit einem Schuh (9) enden, und die axial durch Drahtklemmen (10) verlängert sind, die quer zu den Kerben der Drahtführung den elektrischen Kontakt der drei Phasen des Motors sicherstellen werden, und dass die Schuhe Ausgänge des Motors durch ein Anschlussteil (1) hindurch sind.

2. Elektrische Anschlusseinheit für einen bürstenlosen elektromagnetischen Motor nach Anspruch 1, **dadurch gekennzeichnet, dass** das Anschlussteil Y Stecker (5) aufnimmt, die mit einer gedruckten Schaltung verbunden sind und Steuerelemente eines Kodierers verbinden.

3. Elektrische Anschlusseinheit für einen bürstenlosen elektromagnetischen Motor nach einem der vorhergehenden Ansprüche, **dadurch gekennzeichnet, dass** die drei elektrischen Anschlussschuhe des Motors und die Y Stecker des Kodierers Teil desselben Anschlussteils am Ausgang des Motors sind.

4. Elektrische Anschlusseinheit für einen bürstenlosen elektromagnetischen Motor nach dem vorhergehenden Anspruch, **dadurch gekennzeichnet, dass** das Anschlussteil in Form einer Matrix vorliegt, die 3 x Y Öffnungen aufweist, die drei elektrischen Anschlussschuhe des Motors und die Y elektrischen Steuerungsstecker des Kodierers hindurch lassen.

5. Elektrische Anschlusseinheit für einen bürstenlosen elektromagnetischen Motor nach einem der vorhergehenden Ansprüche, **dadurch gekennzeichnet, dass** der Motor und die Anschlusseinheit in einer einzigen Gruppe spritzgeformt sind.

6. Bürstenloser elektromagnetischer Motor mit einer Statoreinheit (21), die mit drei elektrischen Phasen und X Wicklungen pro Phase gewickelt ist sowie einem Rotor (19) und einer elektrischen Anschlusseinheit gemäß Anspruch 1.

7. Elektromagnetischer Motor nach dem vorhergehenden Anspruch, **dadurch gekennzeichnet, dass** der Motor eine zylindrische Form hat und sich das Anschlussteil seitlich anschließt.

8. Elektromagnetischer Motor nach dem vorhergehenden Anspruch, **dadurch gekennzeichnet, dass** das Anschlussteil Y Stecker aufnimmt, die mit einer gedruckten Schaltung verbunden sind und die Steuerelemente eines durch Hall-Sonden gebildeten Kodierers verbinden, der die elektrische Schaltung der Phasen des Motors steuert, wobei der Kodierer zwei konzentrische, kreisförmige Magnetbahnen aufweist, die jeweils eine Mehrzahl von magnetischen Nord/Süd-Wechseln bilden, wobei die zwei Bahnen eine unterschiedliche Anzahl von Wechseln haben.

9. Elektromagnetischer Motor nach dem vorhergehenden Anspruch, **dadurch gekennzeichnet, dass** die Steuerelemente mit Bezug auf die erste kreisförmige Magnetbahn in A Hall-Sonden und mit Bezug auf die zweite kreisförmige Magnetbahn in B Hall-Sonden unterteilt sind.
